## Europäisches Patentamt

(19) European Patent Office

Office européen des brevets

(11) Veröffentlichungsnummer: **0 286 872**
**B1**

(12) **EUROPÄISCHE PATENTSCHRIFT**

(45) Veröffentlichungstag der Patentschrift:
**19.12.90**

(51) Int. Cl.⁵: **C02F 1/52**, C02F 1/66

(21) Anmeldenummer: **88104599.1**

(22) Anmeldetag: **23.03.88**

(54) **Verfahren zur Reinigung und Entsorgung von russ- und aschehaltigen Abwässern.**

(30) Priorität: **31.03.87  DE 3710804**

(43) Veröffentlichungstag der Anmeldung:
**19.10.88 Patentblatt 88/42**

(45) Bekanntmachung des Hinweises auf die Patenterteilung:
**19.12.90 Patentblatt 90/51**

(84) Benannte Vertragsstaaten:
**BE DE FR GB NL**

(56) Entgegenhaltungen:
**EP-A- 0 017 741**
**DE-A- 3 502 215**
**DE-A- 3 528 598**

**PATENT ABSTRACTS OF JAPAN, Band 6,**
**Nr. 49 (C-96)[927], 31. März 1982; &**
**JP-A-56 161 880 (EBARA INFILCO K.K.) 12-12-1981**

**Die Akte enthält technische Angaben, die nach dem**
**Eingang der Anmeldung eingereicht wurden und die**
**nicht in dieser Patentschrift enthalten sind.**

(73) Patentinhaber: **BASF Aktiengesellschaft,**
**Carl-Bosch-Strasse 38, D-6700 Ludwigshafen(DE)**

(72) Erfinder: **Bruno, Sander, Dr., Moerikestrasse 10,**
**D-6700 Ludwigshafen(DE)**
Erfinder: **Siegfried, Marquardt, Georg-Biundo-Strasse 9,**
**D-6712 Bobenheim-Roxheim(DE)**
Erfinder: **Gero, Lueth, Dr., Paul-Martin Ufer 11,**
**D-6800 Mannheim(DE)**
Erfinder: **Horn, Robert K. Dr., Edenkobener Strasse 1,**
**D-6700 Ludwigshafen(DE)**
Erfinder: **Kempe, Uwe, Dr., Danziger Strasse 9,**
**D-6701 Dannstadt-Schauernheim(DE)**

## Beschreibung

Die vorliegende Erfindung betrifft ein Verfahren zur Reinigung und Entsorgung von ruß- und aschehaltigen Abwässern, die aus Hochtemperaturprozessen stammen und in denen der Ruß in feinstverteiltem und teilweise kolloidalem Zustand vorliegt.

Bei Hochtemperaturprozessen wie z.B. bei der Erzeugung von Synthesegas durch partielle Oxidation von Ölrückständen fällt feinstverteilter Ruß an, der vorwiegend durch Waschen des rußhaltigen Gases mit Wasser aus dem Prozeß ausgeschleust wird. Dabei fallen je nach Verfahrensführung Rußwässer mit 0,5 bis 7 % Rußgehalt an. Der Ruß besitzt je nach Einsatzstoff und Verfahrensweise einen Ascheanteil von 1 bis 15 Gew.-% der, in der Regel die Schwermetalle Nickel und Vanadium enthält.

Die Entsorgung dieses Rußes ist infolge der Toxizität der eingeschlossenen Schwermetall-Verbindungen problematisch. Eine Ableitung der Rußwässer in biologische Kläranlagen ist aufgrund ihrer chemischen Zusammensetzung in den meisten Fällen nicht möglich. Eine Entsorgung des Rußes durch Ablagerung auf einer Deponie scheitert an der Eluierbarkeit der Schwermetalle mit Wasser.

Aus der Patentanmeldung DE-A 3 528 598.2 ist bekannt, daß man die rußhaltigen Abwässer mit Calciumcarbonat oder Kalkhydrat und organischen, vorzugsweise anionaktiven Flockungsmitteln versetzt und die geflockten Suspensionen in einem durchströmten Rührbehälter oder statischen Rohrmischern behandelt und anschließend den Ruß durch Schwerkraftfiltration abtrennt und durch Druckfiltration entwässert und die erhaltenen Filterkuchen mit Eisensalzlösungen besprüht oder beträufelt. Nach dieser Behandlung entspricht der Filterkuchen den Erfordernissen für eine Ablagerung auf einer Deponie.

Die erforderliche gleichmäßige Besprühung oder Beträufelung des Filterkuchens mit Eisensalzlösungen sowie deren genaue Dosierung und Verteilung im Filterkuchen ist jedoch sehr schwierig. Im praktischen Betrieb kommt es häufig zu Unter- oder Überdosierungen, welche die Deponierbarkeit gefährden.

Außerdem führen die sauren Eisensalzlösungen zu erheblichen Korrosionsschäden an den Entwässerungsmaschinen, insbesondere im Abwurfbereich von Siebbandpressen, die nach oben genannter Patentanmeldung bevorzugt für die Rußentwässerung eingesetzt werden. Auch die Transportbänder der mit Eisensalz behandelten Filterkuchen zeigen Korrosionsschäden.

Aufgabe der Erfindung war es demnach, das bekannte Verfahren dahingehend zu modifizieren, daß auf die aufwendige, problematische und hohe Kosten verursachende Behandlung der Filterkuchen mit Eisensalz-Lösungen verzichtet werden kann.

Diese Aufgabe wurde erfindungsgemäß dadurch gelöst, daß man den Abwässern soviel Calciumhydroxid zusetzt, daß der pH-Wert eines nach DIN 38 414 - S 4 hergestellten wäßrigen Auszugs des erhaltenen Filterkuchens mehr als 11,8, vorzugsweise mehr als 12,0 beträgt.

Es war überraschend, daß durch die erfindungsgemäße Art der Kalkzugabe auf den Einsatz von Eisensalzen, die Kosten und erhebliche Probleme verursachen, verzichtet werden kann. Als weiterer Vorteil des erfindungsgemäßen Verfahrens wurde erkannt, daß die Erfordernisse für die Deponiefähigkeit mit hoher Konstanz eingehalten werden können.

Das Calciumhydroxid kann sowohl in Form einer wäßrigen Suspension als auch in fester, feinteiliger Form eingesetzt werden.

Die Zugabe von $Ca(OH)_2$ zum Rußwasser kann vor oder nach dem Zusatz organischer Flockungsmittel erfolgen. Die Vermischung mit dem Rußwasser erfolgt durch Rühren in einem Rührbehälter. Im Fall von Kalkmilch kann auch direkt in die Rußwasserleitung mit nachgeschaltetem statischen Rohrmischer dosiert werden.

Die erforderlichen Dosiermengen liegen je nach Verfahrensführung und der stofflichen Zusammensetzung der Rußwässer im Bereich von 1 bis 10 kg $Ca(OH)_2$ je m³ Rußwasser.

In der Praxis wird die Kalkzugabe vorteilhaft in zwei Stufen durchgeführt. In der ersten Stufe wird das Rußwasser mit Hilfe einer Meß- und Regeleinrichtung auf einen pH-Wert von 11,9 bis 12,1 eingestellt und in der zweiten Stufe werden noch 2 kg $Ca(OH)_2$ je m³ Rußwasser nachdosiert. Auf diese Weise werden pH-Werte von über 12 in den wäßrigen Filterkuchen-Auszügen gewährleistet.

Als organische Flockungsmittel können handelsübliche Marken eingesetzt werden. Bei dem erfindungsgemäßen Verfahren erwiesen sich anionaktive Flockungsmittel als besonders geeignet. Sie werden in Form von 0,05 bis 0,2%igen wäßrigen Lösungen angewendet. Die erforderlichen Flockungsmittelmengen liegen im Bereich von 1 bis 10 g (ber. 100 %) je kg Ruß.

Die Flockungsmittellösungen werden direkt in die Rußwasserleitung eingespeist und mit Eintragshilfen wie z.B. Kegelmischern oder statischen Rohrmischern mit geringem Querschnitt im Rußwasser innerhalb von 1 bis 2 Sekunden intensiv verteilt.

Der nachfolgende Flockenreifeprozeß kann in einem von unten nach oben durchströmten Rührbehälter innerhalb von 0,5 bis 3 Minuten bei Drehzahlen von 5 bis 20 min$^{-1}$ oder in statischen Rohrmischern, die in ihrem Innern Wendeln oder Querschnittsverengungen besitzen, innerhalb von weniger als 60 Sekunden durchgeführt werden.

Nach dieser Vorbehandlung wird das geflockte Rußwasser einer Schwerkraftfiltration unterworfen. Hierfür kommen Bandfilter oder Siebtrommeln in Betracht. Das Bandfilter kann auch in einer bevorzugten Ausführungsform das Unterband einer Siebbandpresse sein. Durch die Schwerkraftfiltration können bis zu 88 % des Wassers abgetrennt werden.

Nach dieser Vorentwässerung wird der verbleibende Rußschlamm einer Druckfiltration im Bereich von 0,5 bis 15 bar zugeführt. Hierfür werden bevorzugt Siebbandpressen eingesetzt, da auch die vorausgehende Schwerkraftfiltration in der ersten Verfahrensstufe einer Siebbandpresse, der Seihzone, durchgeführt werden kann. Auch Kammer-und Membranfilterpressen sind für die Druckfiltration geeignet.

Für die kontinuierliche Durchführung des erfindungsgemäßen Verfahrens kommen insbesondere Siebbandpressen in Betracht, da mit ihnen sowohl die Schwerkraft- als auch die Druckfiltration durchgeführt werden kann. Der Abscheidegrad auf Siebbandpressen liegt bei mindestens 90 % des abzutrennenden Rußes. Die erhaltenen Filterkuchen lösen sich selbsttätig vom Filtertuch ab und sind von fester Konsistenz. Der Feststoffgehalt liegt zwischen 20 und 35 %.

Die nach DIN 38 414 - S 4 hergestellten wäßrigen Auszüge dieser Filterkuchen haben einen pH-Wert von über 12 und enthalten weniger als 0,5 mg/l Nickel und Vanadium. Der TTC-Wert (Triphenyltetrazoliumchlorid-Test, L3 der Deutschen Einheitsverfahren zur Wasseruntersuchung) liegt über ± 0 %. Die Filterkuchen entsprechen somit den Anforderungen für die Ablagerung auf einer Deponie.

Die Erfindung wird nachfolgend anhand von Beispielen näher erläutert. Es wurden Rußwässer aus einem Hochtemperaturprozeß eingesetzt, die 1 bis 6 % Ruß enthielten. Der Ascheanteil des Rußes bestand zu 9 bis 10 % aus Nickel und zu 25 bis 38 % aus Vanadium. Der pH-Wert der Rußwässer lag um 9.

## Beispiel 1

Zu 800 ml Rußwasser mit 1,4 % Ruß werden 4,8 g $Ca(OH)_2$ in Form einer 15%igen Kalkmilch gegeben und 30 Sekunden lang mit einem Blattrührer (7 x 7 cm) verrührt. Anschließend werden 45 ml einer 0,1 %igen Lösung eines organischen Flockungsmittels mit 20 % anionischer Modifizierung zugesetzt und noch 30 Sekunden bei einer Rührer-Drehzahl von 200 min⁻¹ weitergerührt.

Daraufhin wird die Mischung auf einer Büchner-Nutsche von 12 cm Durchmesser mit eingelegtem Filtertuch aus Polypropylen-Leinen gegeben und einer Schwerkraftfiltration unterworfen. Das Filtrat enthält weniger als 1 mg/l Nickel und Vanadium. Nach Beendigung des Filtratflusses wird der Filterrückstrand in einer Labor-Stempelpresse (Filterfläche 13,5 x 13,5 cm) zwischen 2 Polypropylen-Filtüchern 2 min lang bei 10 bar ausgepreßt. Es entsteht ein fester, formstabiler Filterkuchen mit einem Feststoffgehalt von 26 %.

Anschließend wird nach DIN 38 414 - S 4 ein wäßriger Auszug des Filterkuchens hergestellt, indem 385 g Filterkuchen mit 100 g Trockenmasse mit 1 l destilliertem Wasser 24 h lang bei Raumtemperatur geschüttelt werden. Nach Abtrennung der Feststoffe wird der wäßrige Auszug auf pH-Wert, Nickel- und Vanadiumgehalt, sowie TTC-Wert geprüft.

Ergebnisse pH-Wert:12,7
Nickelgehalt:0,05 mg/l
Vanadiumgehalt:0,5 mg/l
TTC-Wert:+30 %

Der Filterkuchen ist deponierfähig.

## Vergleichsbeispiel 1

Es wird ein Ruß-Filterkuchen hergestellt wie in Beispiel 1 beschrieben, jedoch ohne Zusatz von $Ca(OH)_2$ zum Rußwasser. Es entsteht ein Filterkuchen mit einem Feststoffgehalt von 19,6 %. Die Untersuchung des wäßrigen Auszugs dieses Filterkuchens führt zu folgenden Ergebnissen:
pH-Wert:7,2
Nickelgehalt:8 mg/l
Vanadiumgehalt:68 mg/l
TTC-Wert:-40 %

Der Filterkuchen ist wegen der Löslichkeit der Schwermetalle nicht deponierfähig.

## Beispiel 2

1 l Rußwasser mit 1,6 % Ruß wird zuerst mit 50 ml eines organischen Flockungsmittels mit 20%iger anionischer Modifizierung versetzt und 30 Sekunden lang mit einem Blattrührer (7 x 7 cm) gerührt. Dann werden 4 g $Ca(OH)_2$ in Pulverform zugegeben und weitere 30 Sekunden gerührt. Anschließend wird die Suspension auf eine Büchner-Nutsche gegeben und weiterbehandelt wie in Beispiel 1 beschrieben.

Es entsteht ein Filterkuchen mit einem Feststoffgehalt von 23 %. Im wäßrigen Auszug dieses Filterkuchens werden folgende Werte gefunden:
ph-Wert:12,4
Nickelgehalt:0,05 mg/l
Vanadiumgehalt:0,5 mg/l
TTC-Wert:+50 %

Der Filterkuchen ist deponierfähig.

## Vergleichsbeispiel 2

Es wird ein Ruß-Filterkuchen hergestellt wie in Beispiel 2 beschrieben, jedoch ohne Beimischung von $Ca(OH)_2$ zum geflockten Rußwasser. Es entsteht ein Filterkuchen mit 20 % Feststoffgehalt. Die Prüfung des wäßrigen Auszugs dieses Filterkuchens ergibt folgende Resultate:
pH-Wert:7,8
Nickelgehalt:18 mg/l
Vanadiumgehalt:87 mg/l
TTC-Wert:±0 %

Der Filterkuchen ist aufgrund der auslaugbaren Nickel- und Vanadiumverbindungen nicht deponierfähig.

## Beispiel 3

800 ml Rußwasser mit 5,2 % Ruß werden mit 6 g pulverförmigem $Ca(OH)_2$ versetzt und 15 min lang mit einem Blattrührer (7 x 7 cm) bei einer Drehzahl von 450 min⁻¹ gerührt. Daraufhin werden 125 ml einer 0,1%igen Lösung eines organischen Flockungsmittels mit 20 % anionischer Modifizierung zugesetzt und noch 30 Sekunden bei einer Drehzahl von 300 min⁻¹ weitergerührt. Anschließend wird die Mischung weiterbehandelt wie in Beispiel 1 beschrieben. Es wird ein Filterkuchen mit 34 % Feststoff erhalten. Die Untersuchung des wäßrigen Auszugs dieses Filterkuchens führt zu folgenden Ergebnissen:
pH-Wert:12,4
Nickelgehalt:0,05 mg/l
Vanadiumgehalt:0,1 mg/l
TTC-Wert:±20 %
Der Filterkuchen ist deponierfähig.

Vergleichsbeispiel 3

Es wird ein Filterkuchen erzeugt wie in Beispiel 3 beschrieben, jedoch ohne Zumischung von Ca(OH)₂ zum Rußwasser. Der Filterkuchen hat einen Feststoffgehalt von 31 %. Im wäßrigen Filterkuchen-Auszug werden folgende Werte gefunden:
pH-Wert:8,5
Nickelgehalt:0,05 mg/l
Vanadiumgehalt:130 mg/l
TTC-Wert:-10 %
Der Filterkuchen ist infolge der hohen Vanadiumlöslichkeit nicht deponierfähig.

Beispiel 4

Ein Rußwasser mit einem Rußgehalt von 1,7 % wird in einem durchflossenen 30 cm³-Rührbehälter mit 33 kg 12 %iger Ca(OH)₂-Suspension (Kalkmilch) je m³ Rußwasser verrührt und mit einem Volumenstrom von 10 m³/h einer Siebbandpresse (Bandbreite: 1m) zugeführt.
Dem Gemisch aus Rußwasser und Kalkmilch wird in die Rohrleitung eine 0,1 %ige Lösung eines organischen Flockungsmittels mit 20 % anionischer Modifizierung zugegeben. Dosiermenge: 120 l/m³. Zur raschen und vollständigen Verteilung der Flockungsmittellösung wird als Eintragshilfe ein in die Schlammleitung eingebauter Kegelmischer verwendet. Danach erfolgt der Flockungsreifevorgang in einem Rührbehälter (Flockungsreaktor) bei einer Rührerdrehzahl von 15 min⁻¹. Die mittlere Verweilzeit im Rührbehälter beträgt 2 Minuten.
Das mit Kalkmilch behandelte und geflockte Rußwasser wird dann auf einer Siebbandpresse der zweistufigen Entwässerung unterworfen.
Die von der Presse abgeworfenen Filterkuchen haben einen Feststoffgehalt von durchschnittlich 21 %.
Die Prüfung der wäßrigen Auszüge dieser Filterkuchen ergibt folgende Werte:
pH-Wert:12,1 bis 12,3
Nickelgehalt:0,05 mg/l
Vanadiumgehalt:0,5 mg/l
TTC-Wert:+30 bis +40 %
Der Filterkuchen ist deponierfähig.

**Patentansprüche**

1. Verfahren zur Reinigung und Entsorgung von ruß- und aschehaltigen Abwässern, die aus Hochtemperaturprozessen stammen und in denen der Ruß in feinst verteiltem und teilweise kolloidalem Zustand vorliegt und der feste Nickel- und Vanadiumverbindungen enthält, durch Behandlung der Abwässer mit organischen Flockungsmitteln, Vorentwässerung der geflockten Suspension durch Schwerkraftfiltration und Nachentwässerung des Rußschlamms durch Druckfiltration im Bereich von 0,5 bis 15 bar und Deponierung des Filterkuchens, dadurch gekennzeichnet, daß man den Abwässern soviel Calciumhydroxid zusetzt, daß der pH-Wert eines nach DIN 38 414-S4 hergestellten wäßrigen Auszugs des erhaltenen Filterkuchens mehr als 11,8, vorzugsweise mehr als 12,0 beträgt.

2. Verfahren nach Anspruch 1, dadurch gekennzeichnet, daß man die Abwässer in einer ersten Stufe mit Calciumhydroxid auf einen pH-Wert von 11,9–12,1 einstellt und in einer zweiten Stufe noch 2 kg Calciumhydroxid je m³ Rußwasser nachdosiert.

**Claims**

1. A process for cleaning and disposing of a carbon black and ash containing wastewater from a high-temperature process in which the carbon black is present in an extremely finely divided and partly colloidal state and contains solid nickel and vanadium compounds by treatment of the wastewater with an organic flocculant, predewatering of the flocculated suspension by gravity filtration and post-dewatering of the carbon black sludge by pressure filtration within the range from 0.5 to 15 bar and landfilling of the filter cake, which comprises adding sufficient calcium hydroxide to the wastewater that the pH of an aqueous extract, produced according to DIN 38 414-S4, of the filter cake obtained is more than 11.8, preferably more than 12.0.

2. A process as claimed in claim 1, wherein, in a first stage, the wastewater is brought to a pH of 11.9–12.1 using calcium hydroxide and, in a second stage, a further 2 kg of calcium hydroxide are metered in per m³ of carbon black water.

**Revendications**

1. Procédé pour épurer et se débarasser des eaux résiduaires à teneur en suie et cendres qui proviennent de processus à haute température et dans lesquelles la suie se trouve en un état très finement divisé et partiellement colloïdal et contient des composés de nickel et vanadium solides, par traitement des eaux résiduaires avec des floculants organiques, prédeshydratation de la suspension après floculation par filtration par gravité et post-deshydratation de la boue fuligineuse par filtration sous pression dans les limites de 0,5 à 15 bar et mise en dépôt du gateau de filtrat, caractérisé par le fait qu'on ajoute aux eaux résiduaires assez d'hydroxyde de calcium pour que la valeur du pH d'un extrait aqueux, préparé selon DIN 38 414-S4, du gateau de filtrat obtenu soit supérieur à 11,8, de préférence supérieur à 12,0.

2. Procédé selon la revendication 1, caractérisé par le fait que l'on règle les eaux usées, dans un premier stade, avec de l'hydroxyde de calcium, à une valeur de pH de 11,9–12,1 et, dans un deuxième stade, on complète encore le dosage avec 2 kg d'hydroxyde de calcium par m³ d'eau fuligineuse.